# FASCICULE DE BREVET EUROPEEN

(11) **EP 3 551 325 B1**
(45) Date de publication et mention de la délivrance du brevet: **02.06.2021**
(21) Numéro de dépôt: 17821503.4
(22) Date de dépôt: 06.12.2017
(51) Int. Cl.: B01J 7/02, C01B 3/06

(54) **COMPOSITION AQUEUSE D'HYDRURES**
WÄSSRIGE ZUSAMMENSETZUNG VON HYDRIDEN
AQUEOUS COMPOSITION OF HYDRIDES

(30) Priorité: 08.12.2016 FR 1662167
(43) Date de publication de la demande: 16.10.2019
(73) Titulaire: Commissariat à l'Énergie Atomique et aux Énergies Alternatives, 75015 Paris (FR)
(72) Inventeur: DELMAS, Jérôme, 33700 Mérignac (FR); BOUVIER, Michaël, 38760 Varces-Allières-et-Risset (FR); CAPRON, Philippe, 38730 Virieu sur Bourbre (FR); ROUGEAUX, Isabelle, 36690 Chabons (FR)
(74) Mandataire: Nony
(86) Numéro de dépôt international: PCT/EP2017/081637
(87) Numéro de publication internationale: WO 2018/104369

(56) Documents cités:
- WO-A1-2006/090205
- WO-A2-03/084866
- US-A1- 2004 067 195

## Description

La présente invention concerne une composition aqueuse d'hydrures dédiés à être hydrolysés par voie catalytique pour générer du dihydrogène H₂, un dispositif pour générer du dihydrogène par hydrolyse catalytique de la composition aqueuse d'hydrures, un procédé de formation de la composition aqueuse d'hydrures et un procédé de génération de dihydrogène.

Un dispositif pour générer du dihydrogène, communément appelé « cartouche », comporte classiquement un premier compartiment contenant un milieu aqueux, un deuxième compartiment contenant une charge solide comportant un ou plusieurs hydrures, et un système catalytique disposé dans le premier compartiment. Des exemples de dispositifs sont par exemple décrits dans US 2005/0276746 A1 et WO 2010/051557 A1.

Initialement, les deux compartiments sont étanches l'un de l'autre et sont placés en communication fluidique lors de l'activation de la cartouche. Le milieu aqueux et la charge solide se mélangent alors et la charge solide est dissoute dans le milieu aqueux pour former une composition aqueuse d'hydrure(s). Le système catalytique contient un catalyseur d'hydrolyse des hydrures. Au contact du catalyseur, l'hydrolyse des hydrures est activée pour former du dihydrogène. Lorsque la pression de dihydrogène au sein de la cartouche atteint un seuil critique, le système catalytique est disposé dans une configuration où le catalyseur est isolé de la composition aqueuse d'hydrure, inhibant la réaction d'hydrolyse.

Afin d'obtenir une cartouche de haute densité d'énergie massique, c'est à dire présentant un rapport entre la masse de dihydrogène apte à être générée sur la masse de la cartouche contenant les réactifs avant activation, l'hydrure est généralement le borohydrure de sodium NaBH₄. Le borohydrure de sodium présente l'avantage d'un faible coût, d'une simplicité de mise en œuvre et permet d'assurer un fonctionnement sûr de la cartouche à une température supérieure à 20°C, sans risque d'emballement incontrôlable de la réaction d'hydrolyse.

Cependant, pour une température inférieure à 20°C, et en particulier inférieure à 0°C, le procédé de génération de dihydrogène par hydrolyse catalytique d'une composition aqueuse de borohydrure de sodium présente un faible rendement. A une telle température, des produits de la réaction d'hydrolyse, par exemple du métaborate de sodium, précipitent alors au sein de la composition aqueuse d'hydrures et peuvent venir se déposer sur le système catalytique. Ils peuvent empêcher que le catalyseur soit isolé de la composition aqueuse de borohydrure de sodium lorsque la pression de dihydrogène atteint le seuil critique. La pression et la température dans la cartouche croissent alors brutalement, ce qui augmente les risques d'implosion de la cartouche. En variante, en s'accumulant sur le système catalytique, ils peuvent former un joint de colmatage isolant le catalyseur d'hydrolyse des hydrures, empêchant toute génération de dihydrogène WO 2006/090205 A1 divulgue une composition pour la génération d'hydrogène qui contient de l'eau comme solvant plus KOH et/ou NaOH et KBH₄ et la possibilité d'utiliser comme hydrures un mélange entre KBH₄ et NaBH₄.

L'invention vise à s'affranchir des inconvénients décrits ci-dessus.

Selon un premier de ses aspects, l'invention concerne une composition aqueuse d'hydrures dédiés à être hydrolysés par voie catalytique pour générer du dihydrogène H₂, la composition aqueuse d'hydrures comportant un solvant aqueux et des constituants au moins partiellement, de préférence complètement solubilisés dans le solvant aqueux, les dits constituants étant :
- de l'hydroxyde de potassium KOH,
- du borohydrure de potassium KBH₄, et
- un deuxième hydrure, autre que KBH₄, présentant une capacité de stockage d'hydrogène supérieure ou égale à 7,4%,
- optionnellement, un additif exothermique choisi parmi un troisième hydrure, différent du borohydrure de potassium et du deuxième hydrure, présentant une chaleur latente de réaction d'hydrolyse supérieure à 8 kJ/kg, un composé soluble dans l'eau présentant une chaleur latente de dissolution inférieure à -30 kJ/mol et leurs mélanges, le rapport D/K de la concentration en deuxième hydrure de la composition aqueuse d'hydrures sur la concentration en borohydrure de potassium de la composition aqueuse d'hydrures étant compris entre 1,0 et 9,0, lesdites concentrations étant exprimées en pourcentages en masse sur la base de la masse de la composition aqueuse d'hydrures.

Par ailleurs, l'invention concerne, selon un deuxième de ses aspects, un dispositif utile pour générer du dihydrogène H₂ par hydrolyse catalytique d'hydrures contenus dans une composition aqueuse d'hydrures, notamment telle que selon l'invention, le dispositif comportant
un premier compartiment contenant un milieu aqueux comportant un solvant aqueux et de l'hydroxyde de potassium KOH au moins partiellement, de préférence complètement dissous dans le solvant aqueux, et
un deuxième compartiment contenant une charge solide comportant, en pourcentages en masse sur la base de masse de la charge solide et pour un total de 100,0 % :
- 10,0 % à 50,0 % de borohydrure de potassium KBH₄,
- 50,0 % à 90,0 %, d'un deuxième hydrure, autre que KBH₄, présentant une capacité de stockage d'hydrogène supérieure ou égale à 7,4%,
- 10,0 % au plus d'un additif exothermique choisi parmi un troisième hydrure, différent du borohydrure de potassium et du deuxième hydrure, présentant une chaleur latente de réaction d'hydrolyse supérieure à 8 kJ/kg, un composé soluble dans l'eau présentant une chaleur latente de dissolution inférieure à -30 kJ/mol et leurs mélanges,
- moins de 2,0 % d'autres composants,
   les premier et deuxième compartiments étant en communication fluidique dans une configuration de génération de dihydrogène du dispositif, de sorte à former la composition aqueuse d'hydrures par mise en contact du milieu aqueux avec la charge solide.

L'invention concerne par ailleurs, selon un troisième de ses aspects, un procédé de formation d'une composition aqueuse d'hydrures, de préférence selon l'invention, comportant une étape de dissolution au moins partielle, voire totale, d'une charge solide dans un milieu aqueux,
la charge solide comportant, en pourcentages en masse sur la base de la masse de la charge solide et pour un total de 100 % :
- 10,0 % à 50,0 % de borohydrure de potassium KBH₄,
- 50,0 % à 90,0 %, d'un deuxième hydrure, autre que KBH₄, et présentant une capacité de stockage d'hydrogène supérieure ou égale à 7,4%,
- 10,0 % au plus d'un additif exothermique choisi parmi un troisième hydrure, différent du borohydrure de potassium et du deuxième hydrure, présentant une chaleur latente de réaction d'hydrolyse supérieure à 8 kJ/kg, un composé soluble dans l'eau présentant une chaleur latente de dissolution inférieure à -30 kJ/mol et leurs mélanges,
- moins de 2,0 % d'autres constituants,
   le milieu aqueux comportant un solvant aqueux et de l'hydroxyde de potassium KOH au moins partiellement, de préférence complètement dissous dans le solvant aqueux.

La « capacité de stockage d'hydrogène » d'un hydrure correspond, pour une mole dudit hydrure, au rapport de la masse d'hydrogène contenu dans ladite mole, sur la masse de la mole dudit hydrure.

De manière surprenante, bien que le borohydrure de potassium présente une capacité de stockage de dihydrogène inférieure à celle du deuxième hydrure, les inventeurs ont découvert qu'une composition aqueuse d'hydrures selon l'invention assure, lorsqu'elle est hydrolysée par voie catalytique, une génération de dihydrogène et un débit de dihydrogène élevés. En outre, les inventeurs ont notamment observé que l'hydroxyde de potassium participe, en particulier à une température inférieure à 0°C, à l'obtention d'une composition aqueuse d'hydrures permettant une meilleure solubilisation des sous-produits de réaction que les compositions de l'art antérieur, ainsi qu'une faible viscosité. En outre, après hydrolyse des hydrures, la composition aqueuse d'hydrures comporte des produits de la réaction d'hydrolyse, notamment le métaborate de potassium KBO₂, qui sont dissous dans la composition aqueuse. Les risques d'emballement ou d'inhibition de la réaction d'hydrolyse par accumulation de précipités dans la composition aqueuse d'hydrures sont ainsi réduits. Enfin, l'hydroxyde de potassium limite la décomposition spontanée du borohydrure de potassium. La pression de dihydrogène au sein du dispositif est ainsi régulée et les pertes de dihydrogène hors des périodes où la composition aqueuse est mise en contact avec un catalyseur d'hydrolyse des hydrures de la composition sont réduites.

De plus, même lorsque la température de la composition est inférieure à 0°C, la cinétique d'atteinte d'un débit d'usage de dihydrogène généré est rapide, et le débit d'usage de dihydrogène généré est maintenu une fois atteint sans risque que la génération de dihydrogène ne s'arrête brutalement ou ne s'emballe. Le dispositif et la composition aqueuse d'hydrures selon l'invention permettent ainsi une génération de dihydrogène de rendement élevé, fiable et sûre.

Par ailleurs, la composition aqueuse d'hydrures et/ou le dispositif et/ou le procédé de formation selon l'invention peuvent comporter les caractéristiques optionnelles suivantes.

De préférence, le deuxième hydrure choisi parmi le borohydrure de sodium NaBH₄, le borohydrure de magnésium Mg(BH₄)₂, le borohydrure de calcium Ca(BH₄)₂, le borohydrure de lithium LiBH₄, l'hydrure de lithium aluminium LiAlH₄, l'hydrure de magnésium MgH2, l'hydrure de sodium aluminium NaAlH₄ et leurs mélanges.

De préférence, le deuxième hydrure est un borohydrure. Au cours de l'hydrolyse de la composition aqueuse d'hydrures, et de préférence lorsque le deuxième hydrure est du borohydrure de sodium, l'hydroxyde de potassium KOH favorise, au sein de la composition aqueuse d'hydrures la production de métaborate de potassium KBO₂, résultant de l'association d'ions K⁺ avec des ions BO₂⁻ provenant de l'hydrolyse du deuxième hydrure, dans une quantité telle que le métaborate de potassium KBO₂ est dissous dans la composition aqueuse d'hydrures dans une plage de température comprise entre -30 °C et 100 °C, et notamment à une température inférieure à 0 °C.

De préférence le deuxième hydrure est le borohydrure de sodium NaBH₄. Le rendement de la réaction d'hydrolyse de la composition aqueuse d'hydrures est ainsi optimal tout en assurant un fonctionnement particulièrement fiable du dispositif dans laquelle ladite réaction est mise en œuvre, notamment lorsque la température de la composition aqueuse d'hydrures est inférieure à 0°C.

Pour sa part, lors de la formation de la composition aqueuse d'hydrures, par exemple par mélange du milieu aqueux avec la charge solide au sein du dispositif selon l'invention comme cela sera décrit plus en détail par la suite, l'additif exothermique favorise une solubilisation rapide du borohydrure de potassium et du deuxième hydrure dans le solvant aqueux. La cinétique de la réaction d'hydrolyse de la composition aqueuse d'hydrures est ainsi accélérée.

L'augmentation locale de température provenant de la dissolution dudit composé soluble dans l'eau lors de la formation de la composition aqueuse d'hydrures et/ou de l'hydrolyse du troisième hydrure de la réaction d'hydrolyse de la composition aqueuse d'hydrures favorise la dissolution du deuxième hydrure et du borohydrure de potassium dans le milieu aqueux.

Comme décrit précédemment, l'additif exothermique peut être un troisième hydrure. Le troisième hydrure peut présenter une chaleur latente de réaction d'hydrolyse supérieure à 5 kJ/kg, de préférence supérieure à 15 kJ/kg, de préférence supérieure à 30 kJ/kg, de préférence supérieure à 50 kJ/kg, voire de préférence supérieure à 75 kJ/kg.

Par ailleurs, outre l'augmentation de température liée son l'hydrolyse lors de la réaction d'hydrolyse de la composition aqueuse d'hydrures, le troisième hydrure apporte lors de ladite réaction d'hydrolyse une part de la quantité de dihydrogène généré.

De préférence, le troisième hydrure est choisi parmi l'hydrure de calcium CaH₂, l'hydrure de lithium LiH, l'hydrure de lithium aluminium LiAlH₄, l'hydrure de sodium aluminium NaAlH₄, le borohydrure de lithium LiBH₄, l'hydrure de magnésium MgH₂, et leurs mélanges. De préférence, le troisième hydrure est choisi parmi l'hydrure de lithium LiH et le borohydrure de lithium LiBH₄. De façon plus particulièrement préféré, le troisième hydrure est l'hydrure de lithium LiH.

En variante, l'additif exothermique peut être un composé soluble dans l'eau. Le composé soluble dans l'eau peut être choisi parmi les hydroxydes, les chlorures, et leurs mélanges. De préférence, le composé soluble est choisi parmi NaOH, KOH, CaCl₂, CsOH, MgCl₂ et leurs mélanges. De manière particulièrement préférée, le composé soluble dans l'eau est MgCl₂.

L'additif exothermique peut être choisi parmi LiH, LiBH₄, CaCl₂, NaOH, CsOH et MgCl₂ et leurs mélanges.

Enfin, de préférence, le solvant aqueux est l'eau.

L'invention concerne encore un procédé d'hydrolyse par voie catalytique de la composition aqueuse d'hydrures selon l'invention pour générer du dihydrogène, le procédé comportant la mise en contact de la composition aqueuse d'hydrures avec un catalyseur d'hydrolyse des hydrures de ladite composition aqueuse d'hydrures.

Les chaleurs latentes de dissolution et les chaleurs latentes de réaction d'hydrolyse peuvent être mesurées par exemple par l'utilisation d'une bombe calorimétrique de Bertholet, ou bien par l'utilisation d'un calorimètre différentiel à balayage.

De préférence, la température de la composition aqueuse d'hydrures est inférieure ou égale à 25°C, voire inférieure ou égale à 10°C, voire inférieure ou égale à 0°C, voire inférieure ou égale à -10°C, voire inférieure ou égale à -20°C.

Selon un quatrième de ses aspects, l'invention concerne enfin un dispositif utile pour générer du dihydrogène comportant :
- un réservoir contenant une composition aqueuse d'hydrures selon l'invention, et
- un système catalytique disposé dans le réservoir et comportant un catalyseur d'hydrolyse des hydrures de la composition aqueuse d'hydrures,
   le système catalytique étant configuré pour que le catalyseur soit au contact de la composition aqueuse d'hydrures dans une configuration d'hydrolyse et isolé de la composition aqueuse d'hydrures dans une autre configuration du dispositif.

Comme cela apparaîtra par la suite, le dispositif selon le quatrième aspect de l'invention peut être le dispositif selon le deuxième aspect de l'invention tel que configuré dans la configuration de production de dihydrogène.

D'autres caractéristiques et avantages de l'invention apparaîtront encore à la lecture de la description détaillée qui va suivre et à la lecture du dessin annexé dans lequel :
- la figure 1 représente un exemple de réalisation d'un dispositif selon l'invention dans une configuration inactive, vu selon une coupe longitudinale du dispositif,
- la figure 2 représente un exemple de réalisation d'un dispositif selon l'invention dans la configuration de génération d'hydrogène, vu selon une coupe longitudinale du dispositif,
- les figures 3 à 5 représentent différentes variantes de réalisation d'un dispositif selon l'invention vues chacune selon une coupe longitudinale du dispositif, et
- les figures 6 à 12 sont des courbes représentant, en unités arbitraires, l'évolution du débit de dihydrogène généré et de la pression de dihydrogène en fonction du temps, au cours d'une réaction d'hydrolyse de différentes compositions aqueuses d'hydrures selon l'invention et hors invention.

Dans le dessin annexé, les proportions réelles des divers éléments constitutifs ou leurs espacements n'ont pas été toujours été respectés dans un souci de clarté. Par ailleurs, certains éléments peuvent ne pas avoir été représentés en contact les uns avec les autres dans un souci de clarté, alors qu'ils le sont en pratique.

Par ailleurs, les expressions « comportant un », « contenant un » et « ayant un » sont comprises comme signifiant respectivement « comportant au moins un », « contenant au moins un » et « ayant au moins un ».

Sauf indication contraire, un pourcentage est exprimé en masse.

La composition aqueuse d'hydrures selon l'invention comporte un solvant aqueux. Par ailleurs, elle comporte de l'hydroxyde de potassium KOH, du borohydrure de potassium KBH₄, et le deuxième hydrure.

Le rapport D/K de la concentration en deuxième hydrure de la comosition aqueuse d'hydrures sur la concentration en borohydrure de potassium de la composition aqueuse d'hydrures est compris entre 1,0 et 9,0, les concentrations en deuxième hydrure et en borohydrure de potassium étant exprimées en masse sur la base de la masse de la composition aqueuse d'hydrures. De préférence, ledit le rapport D/K est supérieur ou égal à 1,5, de préférence supérieur ou égal à 2,0 et/ou inférieur ou égal à 6,0, de préférence inférieur ou égal à 4,0, voire de préférence inférieur ou égal à 3,0, par exemple égal à 2,55. Ainsi, la composition aqueuse d'hydrures présente une faible viscosité, notamment à une température inférieure à 0°C. En outre, un tel rapport D/K améliore le compromis entre une densité d'énergie massique élevée du dispositif dans lequel la réaction d'hydrolyse de la composition aqueuse d'hydrures est mise en œuvre et un fonctionnement fiable à basse température, le deuxième hydrure présentant une capacité de stockage d'hydrogène plus élevée que celle de du borohydrure de potassium.

De préférence, la composition aqueuse d'hydrures comporte une concentration en borohydrure de potassium KBH₄, exprimée en pourcentages en masse sur la base de la masse de la composition aqueuse d'hydrures, comprise entre 2,0 % et 10,0 %, de préférence comprise entre 5,0 % et 9,0 %.

De préférence, la composition aqueuse d'hydrures comporte une concentration en deuxième hydrure, exprimée en pourcentages en masse sur la base de la masse de la composition aqueuse d'hydrures, comprise entre 10,0 % et 20,0 %, de préférence comprise entre 13,0 % et 19,0 %.

De préférence, la composition aqueuse d'hydrures comporte une concentration en hydroxyde de potassium KOH, exprimée en pourcentages en masse sur la base de la masse de la composition aqueuse d'hydrures, comprise entre 1,0 % et 40,0 %. De préférence, elle est supérieure ou égale à 2,0 % et/ou inférieure ou égale à 24,0 %, de préférence inférieure ou égale à 10,0 %, par exemple égale à 8,0 %.

De préférence, la composition aqueuse d'hydrures comporte une concentration en additif exothermique, exprimée en pourcentages en masse sur la base de la masse de la composition aqueuse d'hydrures, comprise entre 0,3 % et 2,0 %, de préférence inférieure ou égale à 1,0 %.

La composition aqueuse peut comporter d'autres constituants. Les « autres constituants » sont les espèces autres que l'hydroxyde de potassium, le borohydrure de potassium, le deuxième hydrure et le cas échéant, l'additif exothermique. Les autres constituants peuvent notamment contenir au moins un inhibiteur de cristallisation, par exemple le sodium tartrate ou le méthyl 4-hydroxybenzoate. Par exemple, les autres constituants sont les impuretés accompagnant les matières premières mélangées mises en œuvre pour préparer la composition aqueuse d'hydrures.

De préférence, la composition aqueuse d'hydrures comporte une concentration en autres constituants, exprimée en pourcentages en masse sur la base de la masse de la composition aqueuse d'hydrures, inférieure ou égale à 2,0 %.

Par ailleurs, la température de la composition aqueuse d'hydrures peut être inférieure ou égale à 25°C, voire inférieure ou égale à 10°C, voire inférieure ou égale à 0°C, voire inférieure ou égale à -10°C, voire inférieure ou égale à -20°C.

Comme cela sera détaillé par la suite, la composition aqueuse d'hydrures peut être contenue dans un réservoir. De préférence, le volume de la composition aqueuse d'hydrures peut être compris entre 0,01 litre et 5 litres.

Pour former la composition aqueuse d'hydrures selon le procédé de formation selon l'invention on dissout le borohydrure de potassium et le deuxième hydrure dans un milieu aqueux, le milieu aqueux comportant le solvant aqueux et l'hydroxyde de potassium. De préférence, la composition aqueuse d'hydrures comporte une concentration en hydroxyde de potassium, exprimée en pourcentages en masse sur la masse du milieu aqueux, comprise entre 8,0 % et 15,0 %, par exemple égale à 10,0 %. Notamment, comme cela sera illustré par la suite, la composition aqueuse d'hydrures peut être formée au moyen du dispositif selon l'invention.

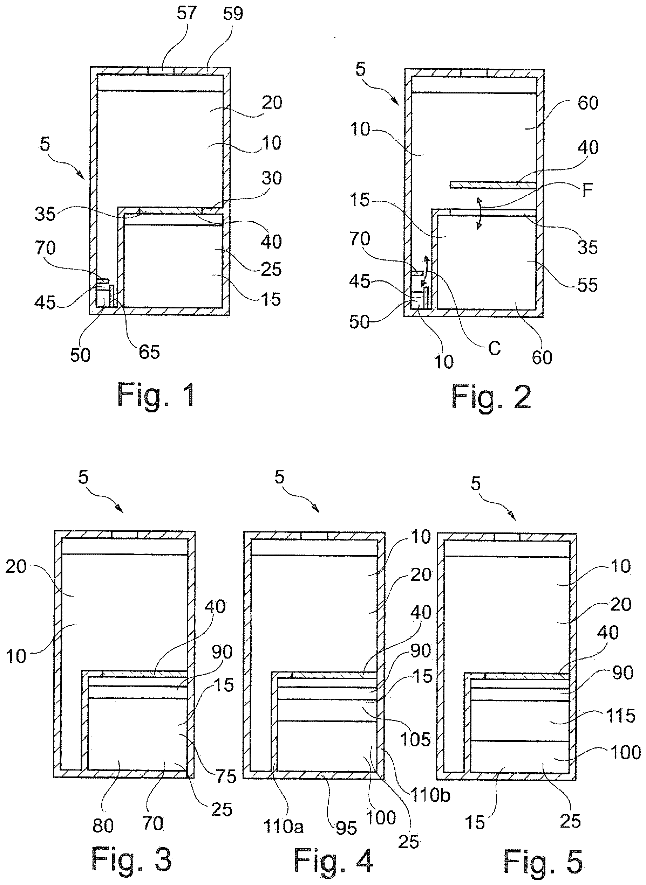

Pour ce qui concerne les dispositifs utiles pour générer du dihydrogène, des exemples sont décrits sur les figures 1 à 5.

Le dispositif 5 de la figure 1, comporte des premier 10 et deuxième 15 compartiments. Le premier compartiment comporte le milieu aqueux 20 et le deuxième compartiment comporte la charge solide 25.

Le volume du premier compartiment peut être compris entre 0,008 litre et 4 litres et/ou le volume du deuxième compartiment peut être compris entre 0,002 litre et 1 litre.

De préférence, dans une configuration, dite « inactive », du dispositif, les premier et deuxième compartiments sont isolés l'un de l'autre. Par exemple, comme illustré sur la figure 1, ils sont séparés par une cloison 30 étanche au milieu aqueux, si bien qu'aucun contact n'est alors possible entre la charge solide 25 et le milieu aqueux 20. La cloison étanche peut comporter une ouverture 35 traversant la cloison de part en part dans son épaisseur et découchant de part et d'autre dans les premier 10 et deuxième 15 compartiments. Dans la configuration inactive, l'ouverture est fermée par un couvercle 40 étanche au milieu aqueux.

Par ailleurs, de préférence, le dispositif comporte un système catalytique 45 contenant un catalyseur 50 d'hydrolyse des hydrures de la composition aqueuse d'hydrures, par exemple logé dans le premier compartiment comme illustré sur la figure 1.

La figure 2 illustre le dispositif selon l'invention dans la configuration de génération de dihydrogène, et illustre par la même notamment le quatrième aspect de l'invention. Dans la configuration de génération de dihydrogène, les premier et deuxième compartiments sont en communication fluidique, comme indiqué par la flèche F, formant ainsi un réservoir 55.

Le volume du réservoir peut être compris entre 0,01 litre et 6 litre.

Par ailleurs, le dispositif comporte une fenêtre 57 traversant une paroi 59 du dispositif de part en part dans son épaisseur, par lequel le dihydrogène généré par la réaction d'hydrolyse peut être évacué du dispositif.

Le passage de la configuration inactive à la configuration de production de gaz peut être effectué par actionnement d'un organe d'actionnement de la part de l'utilisateur du dispositif. Par exemple, comme cela est illustrée sur la figure 2, dans la configuration de production de gaz, le couvercle 40 est ôté de l'ouverture, si bien qu'en disposant le dispositif de sorte que le premier compartiment est dans une position verticale plus haute que le deuxième compartiment, le milieu aqueux peut s'écouler sous l'effet de la gravité dans le deuxième compartiment sous l'effet de la gravité et entrer ainsi en contact avec la charge solide. La composition aqueuse d'hydrures 60 est alors formée par dissolution de la charge solide dans le milieu aqueux. Comme illustré sur la figure 2, elle est contenue dans le réservoir formé par la réunion des premier et deuxième compartiments et est en contact avec le système catalytique 45 disposé dans le réservoir et contenant le catalyseur 50, par exemple choisi parmi le platine, le ruthénium, le nickel, le cobalt et leurs mélanges. Dans l'exemple de la figure 2, le système catalytique comporte en outre un boîtier 65 dans lequel est logé le catalyseur, le boîtier étant fermé par un opercule 70.

Dans la configuration de génération de dihydrogène, le dihydrogène est généré dès lors que la composition aqueuse d'hydrures 60 est mise en contact avec ledit catalyseur 50.

Le système catalytique est configuré pour que le catalyseur soit au contact de la composition aqueuse d'hydrures dans une configuration d'hydrolyse et isolé de la composition aqueuse d'hydrures dans une autre configuration du dispositif. Notamment, dans la configuration d'hydrolyse, lorsque la pression de dihydrogène dans le dispositif est inférieure à une valeur seuil, l'opercule est écarté du boitier, permettant l'accès de la composition aqueuse d'hydrures au catalyseur, comme illustré par la flèche C. La réaction d'hydrolyse peut ainsi avoir lieu. Dans l'autre configuration du système catalytique, par exemple lorsque la pression de dihydrogène dépasse ladite valeur seuil, l'opercule obture hermétiquement le boitier, isolant le catalyseur de la composition aqueuse d'hydrures.

Dans la configuration de génération de dihydrogène du dispositif, le système catalytique peut donc être disposé dans la configuration d'hydrolyse ou dans l'autre configuration.

La charge solide comporte le borohydrure de potassium, le deuxième hydrure et optionnellement l'additif exothermique, et d'autres composants.

De préférence, la charge solide comporte une teneur en deuxième hydrure supérieure à 55,0%, de préférence supérieure ou égale à 60,0 %, voire de préférence supérieure ou égale à 65,0% et/ou inférieure ou égale à 85,0 %, de préférence inférieure ou égale à 80,0 %, voire de préférence inférieure ou égale à 75,0%, en pourcentages en masse de la base de la masse de la charge solide.

Par ailleurs, de préférence, la charge solide comporte une teneur en borohydrure de potassium KBH₄ supérieure à 15,0%, de préférence supérieure ou égale à 20,0 %, voire de préférence supérieure ou égale à 25,0% et/ou inférieure ou égale à 45,0 %, de préférence inférieure ou égale à 40,0 %, voire de préférence inférieure ou égale à 35,0%, en pourcentages en masse de la base de la masse de la charge solide.

De préférence, le rapport de ladite teneur massique en deuxième hydrure sur ladite teneur massique en borohydrure de potassium est compris entre 1,0 et 9,0. De préférence, il est supérieur ou égal à 1,5, de préférence supérieur ou égal à 2,0 et/ou inférieur ou égal à 6,0, de préférence inférieur ou égal à 4,0, voire de préférence inférieur ou égal à 3,0, par exemple égal à 2,55.

De préférence, la charge solide comporte une teneur en troisième hydrure supérieure à 0,1%, en pourcentages en masse de la base de la masse de la charge solide.

De préférence, dans la variante où le troisième hydrure comporte un composé soluble dans l'eau, de sorte à optimiser le rendement de la réaction d'hydrolyse, la teneur en composé soluble dans l'eau est comprise entre 0,1% et 5,0%, en pourcentages en masse de la base de la masse de la charge solide.

Les « autres composants » sont les espèces autres que l'hydroxyde de potassium, le borohydrure de potassium, le deuxième hydrure et le cas échéant, l'additif exothermique. Par exemple, les autres composants sont les impuretés accompagnant les matières premières mélangées mises en œuvre pour préparer la charge solide.

La forme et la disposition des composants de la charge solide peuvent être variées.

De préférence, le borohydrure de potassium KBH₄ se présente sous la forme d'une poudre de particules au sein de la charge solide. La solubilisation du borohydrure de potassium KBH₄ dans le milieu aqueux est ainsi facilitée. Afin d'augmenter la densité de la charge solide, les particules de borohydrure de potassium KBH₄ peuvent être liées entre elles pour former au moins un agrégat. De sorte à établir un compromis optimal entre une haute densité d'énergie massique du dispositif et une facilité de dissolution de l'agrégat dans le milieu aqueux, de préférence le ou les agrégats de particules de borohydrure de potassium présentent une porosité comprise entre 5 % et 30 %.

De préférence, la charge solide comporte une teneur en agrégat de particules de borohydrure de potassium KBH₄ liées entre elles, exprimée en pourcentages en masse sur la base de la masse totale de borohydrure de potassium KBH₄ de la charge solide, supérieure ou égale à 10,0 %, de préférence supérieure ou égale à 30,0 % et/ou inférieure ou égale à 90,0 %, de préférence inférieure ou égale à 70,0 %. De préférence, elle est comprise entre 40,0 % et 60,0 %.

De préférence la charge solide comporte une teneur en poudre de particules de borohydrure de potassium KBH₄, exprimée en pourcentages en masse sur la base de la masse totale de borohydrure de potassium KBH₄ de la charge solide, supérieure ou égale à 10 %, de préférence supérieure ou égale à 30,0 %, voire de préférence supérieure ou égale à 40,0 % et/ou inférieure ou égale à 90,0 %, de préférence inférieure à 70,0 %. De préférence, elle est comprise entre 40,0 % et 60,0 %.

De préférence, la charge solide présente une somme des teneurs en agrégat de particules de borohydrure de potassium KBH₄ et en poudre de particules de borohydrure de potassium KBH₄ supérieure à 90,0%, voire de préférence supérieure à 99%, voire égale à 100%, en pourcentages en masse sur la base de la masse totale de borohydrure de potassium KBH₄ de la charge solide.

La charge solide peut comporter au moins une partie du deuxième hydrure se présentant sous la forme de particules. De préférence, pour augmenter la densité de la charge solide et ainsi la densité massique d'énergie du dispositif, les particules du deuxième hydrure sont liées entre elles sous la forme d'un agrégat. De préférence, la porosité de l'agrégat est inférieure à 20 %.

Dans une variante, illustrée sur la figure 3, la charge solide 25 comporte au moins une partie du borohydrure de potassium KBH₄ se présentant sous la forme d'une poudre 70 de particules et au moins une partie du deuxième borohydrure se présentant sous la forme d'une poudre 75 de particules. De préférence, la poudre de particules de borohydrure de potassium et la poudre de particules de deuxième borohydrure forment un mélange. De préférence, les particules de deuxième hydrure et les particules de borohydrure de potassium KBH₄ sont agrégées entre elles et forment un agrégat 80, dont la porosité est de préférence comprise entre 5 % et 20 %. L'agrégat peut en outre comporter le troisième hydrure, et notamment le composé soluble dans l'eau.

La « porosité » d'un agrégat est mesurée selon la technique des mesures des masses volumiques apparente et réelle des hydrures. Dans les variantes où les particules de borohydrure de potassium et/ou les particules du deuxième hydrure sont liées sous la forme d'un agrégat, l'agrégat peut se présenter sous la forme d'une pastille, notamment une plaque, par exemple d'une épaisseur comprise entre 3 mm et 100 mm et/ou cylindrique de révolution.

Par ailleurs, de sorte à accélérer la cinétique de la réaction d'hydrolyse de la composition aqueuse d'hydrures pour atteindre au plus vite le débit d'usage de dihydrogène généré, au moins une partie du deuxième hydrure et/ou l'additif exothermique définit une couche de surface 90, de préférence formée d'une poudre de particules, disposée en surface de la charge solide de telle sorte que suite à un passage de la configuration inactive vers la configuration de production de gaz, la mise en contact du milieu aqueux avec la charge solide s'effectue au niveau de la couche de surface.

De préférence, la couche de surface est formée par une poudre de particules comportant, voire consistant en, le deuxième hydrure et/ou par une poudre de particules comportant, voire consistant en l'additif exothermique.

Dans une variante, la charge solide peut être définie par un empilement formé en succession :
- d'un agrégat comportant de préférence pour plus de 90%, de préférence pour plus de 99%, en pourcentages en masse sur la base de la masse de l'agrégat, voire consistant en, des particules de deuxième hydrure liées entre elles,
- d'une couche ou d'un autre agrégat comportant de préférence pour plus de 90%, de préférence pour plus de 99% en masse, en pourcentages en masse sur la base de la masse de la couche ou de l'autre agrégat respectivement, voire consistant en, des particules de borohydrure de potassium, et
- de la couche de surface.

La figure 4 présente un exemple d'empilement selon cette variante. Le fond 95 du deuxième compartiment est totalement recouvert par un agrégat 100 de particules de deuxième hydrure sur lequel est disposée une couche 105 de particules de borohydrure de potassium. La couche de surface 90 s'étend entre les parois latérales 110a-b du deuxième compartiment et recouvre intégralement la surface supérieure de la couche de particules de borohydrure de potassium. Ainsi, suite au premier passage de la configuration inactive à la configuration de génération de dihydrogène, le milieu aqueux entre en contact d'abord avec la couche de surface. Après dissolution de la couche de surface, le milieu aqueux entre en contact avec la couche de poudre de borohydrure de potassium. De préférence, dans l'exemple de la figure 4, la couche de surface comporte, de préférence pour plus de 90,0 % de sa masse, des particules de borohydrure de sodium.

L'exemple de la figure 5 diffère de celui illustré sur la figure 4 en ce que la couche 105 est remplacée par un agrégat 115 de particules de borohydrure de potassium liées entre elles et en ce que la couche de surface 90 comporte, de préférence pour plus de 90,0 % de sa masse, de MgCl₂ et/ou de LiH.

Dans une autre variante, illustrée sur la figure 3, la charge solide peut être définie par un empilement formé en succession :
- d'un agrégat comportant de préférence pour plus de 90%, de préférence pour plus de 99%, en pourcentages en masse sur la base de la masse de l'agrégat, voire consistant en, des particules de deuxième hydrure et de particules de borohydrure de potassium liées entre elles, et
- de la couche de surface, de préférence comportant, voire consistant en, des particules du deuxième hydrure.

En ce qui le concerne, le milieu aqueux comporte un solvant aqueux et de l'hydroxyde de potassium KOH.

De préférence, la concentration en hydroxyde de potassium du milieu aqueux, exprimée en pourcentages en masse sur la base de la masse du milieu aqueux, est comprise entre 8,0 % et 15,0 %. En particulier, elle peut être supérieure ou égale à 9,0% et/ou inférieure ou égale à 13,0%, notamment inférieure ou égale à 11,0%, par exemple égale à 10,0%.

Par ailleurs, les quantités de milieu aqueux et de charge solide peuvent être définies de telle sorte que la densité massique du dispositif est maximale. De préférence, le rapport de la masse de milieu aqueux sur la masse de charge solide est compris entre 3,0 et 5,0.

### Exemples

L'invention est illustrée ci-dessous au moyen des exemples non limitatifs suivants.

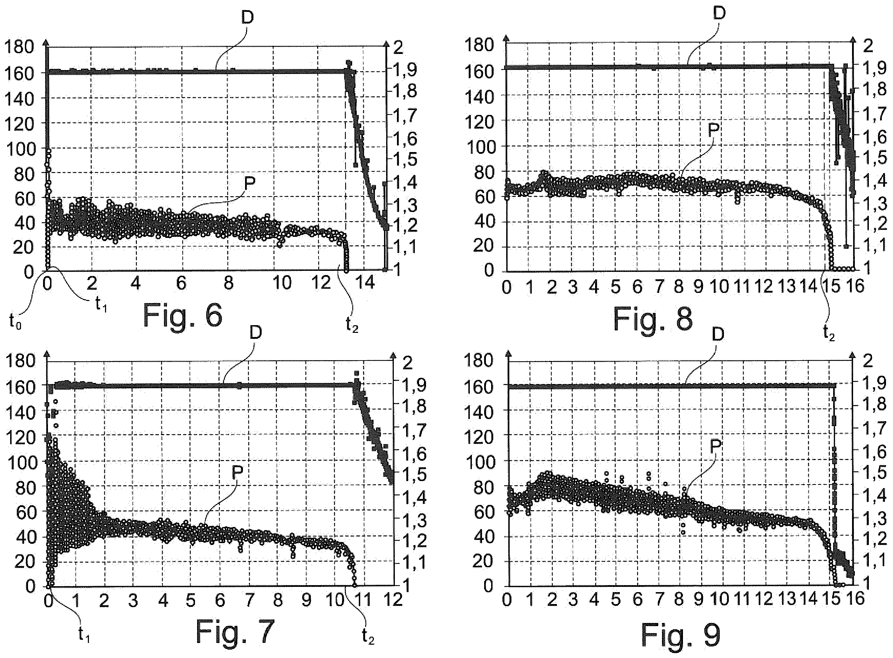

Notamment, sur les figures 6 à 12, les instants, températures, débits de dihydrogène générés et pressions sont exprimés en unités arbitraires.

### Exemple 1 selon l'invention

On dispose d'un dispositif sous la forme d'une cartouche comportant un premier compartiment disposé selon la direction verticale au-dessus d'un deuxième compartiment. Les deux compartiments sont isolés l'un de l'autre par une cloison. La cloison comporte une ouverture traversant la cloison de part en part dans son épaisseur, fermée hermétiquement par un couvercle. Le couvercle est amovible et son retrait résulte en la mise en communication fluidique des premier et deuxième compartiments.

Le premier compartiment comporte une solution d'hydroxyde de potassium KOH dissoute dans de l'eau. La concentration en hydroxyde de potassium KOH est de 10,0 %, en pourcentages en masse sur la base de la masse de la solution.

Le deuxième compartiment comporte une charge solide comportant 70,0 % de borohydrure de sodium et 30,0 % de borohydrure de potassium, en pourcentages en masse sur la base de la masse de la charge solide.

La charge solide est constituée par l'empilement suivant. Une pastille de particules de borohydrure de sodium liées entre elles, présentant une porosité de 10% est disposée sur le fond du deuxième compartiment. La pastille comporte 94 % de la masse du borohydrure de sodium contenu dans la charge solide. La pastille est recouverte par une couche constituée d'une poudre de particules de borohydrure de potassium. La couche est recouverte d'une couche de surface constituée d'une poudre de particules de borohydrure de sodium. La couche de surface comporte 6 % de la masse du borohydrure de sodium contenu dans la charge solide.

Après mise en communication fluidique des premier et deuxième compartiments, une composition aqueuse d'hydrures est formée par mise en contact et dissolution de la charge solide dans le milieu aqueux. La composition est ensuite mise en contact, à l'instant t₀ avec un composé à base de ruthénium qui agit comme catalyseur d'hydrolyse des hydrures de la composition aqueuse d'hydrures.

A l'instant t₀, la température de la composition aqueuse d'hydrures est égale à -10°C.

Comme cela est illustré sur la figure 6, un débit d'usage D de dihydrogène généré de 160 est atteint dès presque dès la mise en contact de la composition aqueuse d'hydrures avec le catalyseur à l'instant t₁=0,1. Par ailleurs, ce débit d'usage de dihydrogène généré reste constant tant que la composition aqueuse d'hydrures contient suffisamment d'hydrures à hydrolyser, c'est à dire jusqu'à l'instant t₂=13. Enfin, la pression P de dihydrogène au sein du dispositif reste ensuite inférieure à 1,4 après l'établissement du débit d'usage de dihydrogène généré. Il est considéré qu'au-delà d'une valeur seuil de pression de dihydrogène de 2,5, le fonctionnement du dispositif est non maîtrisé.

La mise en œuvre de la génération de dihydrogène au moyen du dispositif de l'exemple 1 à une température de -10°C est fiable, par l'atteinte rapide d'un débit d'usage de dihydrogène généré constant, et efficace, par l'atteinte d'un débit d'usage de dihydrogène généré élevé.

### Exemple 2 selon l'invention

L'exemple 2 selon l'invention diffère exclusivement de l'exemple 1 en ce qu'après démarrage de la réaction d'hydrolyse dans les conditions de l'exemple 1, la température de la composition aqueuse d'hydrures à l'instant t₀ de la figure 7 est progressivement réduite à -20°C.

Comme observé sur la figure 7, le débit d'usage D de dihydrogène généré reste constant tant que la composition comporte encore suffisamment d'hydrures (jusqu'à l'instant t₂). Par ailleurs, le débit d'usage de dihydrogène généré est de 160, comme pour l'exemple 1. Enfin, la pression P de dihydrogène dans le dispositif, comprise entre environ les instants 1,0 et environ 1,7 dans les premiers instants de la réaction (entre t=0 et t=2) est ensuite inférieure à 1,3 tout au long de la génération de dihydrogène. Les amplitudes de pression dans les premiers instants de la réaction catalytique proviennent d'une forte réactivité du catalyseur.

La mise en œuvre de la génération de dihydrogène au moyen du dispositif de l'exemple 2 à une température de -20°C est fiable, par l'atteinte rapide d'un débit d'usage de dihydrogène généré constant, et efficace, par l'atteinte d'un débit d'usage de dihydrogène généré élevé.

### Exemple 3 selon l'invention

L'exemple 3 selon l'invention diffère exclusivement de l'exemple 1 en ce la température de la composition aqueuse d'hydrures lors de la mise en contact avec le catalyseur est de 20°C.

Comme observé sur la figure 8, le débit d'usage D de dihydrogène généré est atteint immédiatement et reste constant tant que la composition comporte encore suffisamment d'hydrures (jusqu'à l'instant t₂). Par ailleurs, le débit d'usage D de dihydrogène généré est de 160, comme pour l'exemple 1. Enfin, la pression P de dihydrogène dans le dispositif, est inférieure à 1,5 tout au long de la génération de dihydrogène.

La mise en œuvre de la génération de dihydrogène au moyen du dispositif de l'exemple 3 à une température de 20°C est fiable, par l'atteinte rapide d'un débit d'usage de dihydrogène généré constant, et efficace, par l'atteinte d'un débit d'usage de dihydrogène généré élevé.

### Exemple 4 selon l'invention

L'exemple 4 selon l'invention diffère exclusivement de l'exemple 1 en ce la température de la composition aqueuse d'hydrures lors de la mise en contact avec le catalyseur est de 44°C.

Comme observé sur la figure 9, le débit d'usage D de dihydrogène généré s'établit immédiatement et reste constant tant que la composition comporte encore suffisamment d'hydrures (jusqu'à l'instant t₂). Par ailleurs, le débit d'usage de dihydrogène généré est de 160, comme pour l'exemple 1. Enfin, la pression P de dihydrogène dans le dispositif, est inférieure à 1,6 tout au long de la génération de dihydrogène.

La mise en œuvre de la génération de dihydrogène au moyen du dispositif de l'exemple 4 à une température de 44°C est fiable, par l'atteinte rapide d'un débit d'usage de dihydrogène généré constant, et efficace, par l'atteinte d'un débit d'usage de dihydrogène généré élevé.

### Exemple 5 hors invention

L'exemple 5 diffère de l'exemple 1 en ce que l'hydroxyde de potassium est remplacé par du chlorure de lithium. La composition aqueuse d'hydrures est liquide à la température de -10°C.

Cependant, aucune génération de dihydrogène n'est observée, le chlorure de lithium inhibant la fonction de catalyseur du composant à base de ruthénium.

### Exemple 6 hors invention

L'exemple 6 diffère de l'exemple 1 en ce que le premier compartiment comporte une solution d'hydroxyde de sodium NaOH dissoute dans de l'eau. La concentration en hydroxyde de sodium NaOH est de 8,0 %, en pourcentages en masse sur la base de la masse de la solution.

Par ailleurs, l'exemple 6 diffère encore de l'exemple 1 en ce que la charge solide consiste en du borohydrure de sodium, sous forme de pastilles.

A l'instant de mise en contact t₀ de la composition aqueuse d'hydrures avec le catalyseur, la température de la composition aqueuse d'hydrures est de -10°C.

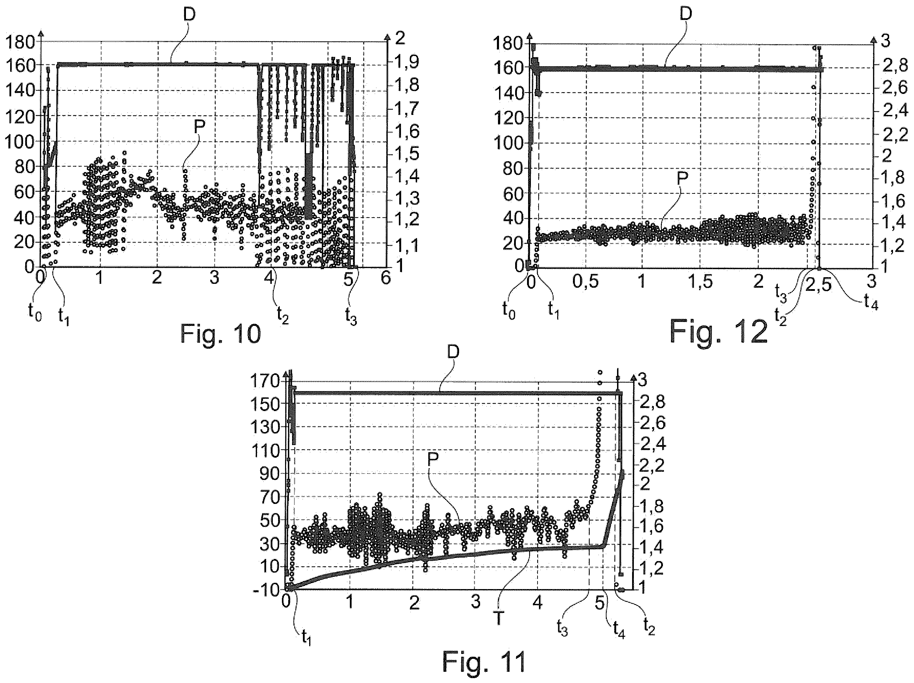

Comme observé sur la figure 10, le débit d'usage de dihydrogène généré s'établit à l'instant t₁ à une valeur de 160 avec retard comparativement à l'exemple 1. Le retard provient de la forme de pastille du borohydrure de sodium qui ralentit la cinétique de solubilisation. En particulier, bien que comportant une proportion de borohydrure de sodium plus élevée que l'exemple 1, le débit d'usage D de dihydrogène généré est identique. Cependant, à partir de l'instant t₂, le débit de dihydrogène généré chute sur de courtes périodes avant de se rétablir à sa valeur d'usage, puis devient nul à partir de l'instant t₃. La pression P au sein du dispositif oscille en conséquence, chutant lorsque le débit de dihydrogène généré est réduit puis devenant nulle. L'arrêt de la réaction d'hydrolyse provient de la précipitation, à la température de -10 °C, de métaborate de sodium NaBO₂, produit lors la réaction d'hydrolyse et qui forme des amas sur le système catalytique, empêchant la mise en contact de la composition aqueuse d'hydrures, et par voie de conséquence, son hydrolyse.

La composition aqueuse d'hydrures de l'exemple 6 n'est donc pas adaptée à générer du dihydrogène de manière fiable.

### Exemple 7 hors invention

L'exemple 7 diffère exclusivement de l'exemple 1 en ce que le premier compartiment comporte une solution d'hydroxyde de sodium NaOH dissoute dans de l'eau et en ce que la concentration en hydroxyde de sodium NaOH est de 8,0 %, en pourcentages en masse sur la base de la masse de la solution.

A l'instant de mise en contact de la composition aqueuse d'hydrures avec le catalyseur, la température de la composition aqueuse d'hydrures est de -10°C.

Comme cela est observé sur la figure 11, le débit D de dihydrogène généré s'établit à une valeur d'usage de 160 à l'instant t₁ sensiblement aussi rapidement que pour l'exemple 1. Il reste constant jusqu'à l'instant t₂, puis augmente brutalement.

De même jusqu'à l'instant t₃, la pression P de dihydrogène évolue peu et reste inférieure à 1,8, puis elle augmente brutalement jusqu'à atteindre 3. Conjointement, la température T de la composition aqueuse d'hydrures, qui avait augmenté jusqu'à l'instant t4 de manière progressive, notamment à cause de l'exothermicité de la réaction d'hydrolyse des deux borohydrures NaBH₄ et KBH₄, croit brutalement.

La réaction d'hydrolyse devient alors incontrôlable et l'augmentation de pression et de température augmentent les risques d'implosion du dispositif et de brûlures pour l'utilisateur. Elle est stoppée à l'instant t₄ en retirant le système catalytique de réservoir comportant la composition aqueuse d'hydrures.

L'emballement de la réaction d'hydrolyse provient de la précipitation, à la température de -10 °C, de métaborate de sodium NaBO₂ et de métaborate de potassium produits lors la réaction d'hydrolyse, qui entravent l'isolation du catalyseur de la composition aqueuse d'hydrures lorsque la valeur de pression seuil de dihydrogène est atteinte.

### Exemple 8 hors invention

L'exemple 8 diffère de l'exemple 6 en ce que l'hydroxyde de sodium est remplacé par de l'hydroxyde de potassium et en ce que la concentration en hydroxyde de potassium KOH est de 10,0 %, en pourcentages en masse sur la base de la masse de la solution.

A l'instant t₀ de mise en contact de la composition aqueuse d'hydrures avec le catalyseur, la température de la composition aqueuse d'hydrures est de -10°C.

Comme cela est observé sur la figure 12, le débit D de dihydrogène généré s'établit à l'instant t₁ à une valeur d'usage de 160 sensiblement aussi rapidement que pour l'exemple 1. Il reste constant jusqu'à l'instant t₂, puis augmente brutalement.

De même jusqu'à l'instant t₃, la pression de dihydrogène évolue peu et reste inférieure à 1,4, puis elle augmente brutalement jusqu'à atteindre 3. La réaction d'hydrolyse devient ainsi incontrôlable et l'augmentation de pression augmente le risque d'implosion du dispositif. La réaction est stoppée à l'instant t₄ en retirant le système catalytique de réservoir comportant la composition aqueuse d'hydrures.

Contrairement à l'exemple 6 où la précipitation de métaborate de sodium NaBO₂, en s'amassant sur le système catalytique forme une barrière empêchant le contact entre la composition aqueuse d'hydrures et le catalyseur, dans l'exemple 8, la précipitation de NaBO₂, empêche que le catalyseur soit isolé de ladite composition lorsque la valeur de pression de dihydrogène seuil est atteinte, résultant en l'emballement de la réaction d'hydrolyse.

Comme cela apparait clairement, l'invention permet d'obtenir une génération rapide de dihydrogène, de manière fiable et avec un rendement élevé, même à basse température, notamment inférieure à 0 °C.

L'invention n'est toutefois pas limitée aux modes de réalisation qui sont décrits dans la présente description. Notamment, elle pourrait s'appliquer à toute réaction d'hydrolyse d'hydrures chimiques, et à la génération d'un gaz autre que le dihydrogène.

## Revendications

1. Composition aqueuse d'hydrures dédiés à être hydrolysés par voie catalytique pour générer du dihydrogène H₂, la composition aqueuse d'hydrures comportant un solvant aqueux et des constituants au moins partiellement, de préférence complètement solubilisés dans le solvant aqueux, lesdits constituants étant :
- de l'hydroxyde de potassium KOH,
- du borohydrure de potassium KBH₄, et
- un deuxième hydrure, autre que KBH₄ et présentant une capacité de stockage d'hydrogène supérieure à 7,4 %,
- optionnellement, un additif exothermique choisi parmi un troisième hydrure, différent du borohydrure de potassium et du deuxième hydrure, présentant une chaleur latente de réaction d'hydrolyse supérieure à 8 kJ/kg, un composé soluble dans l'eau présentant une chaleur latente de dissolution inférieure à -30 kJ/mol et leurs mélanges,
le rapport D/K de la concentration en deuxième hydrure de la composition aqueuse d'hydrures sur la concentration en borohydrure de potassium de la composition aqueuse d'hydrures étant compris entre 1,0 et 9,0, lesdites concentrations étant exprimées en pourcentages en masse sur la base de la masse de la composition aqueuse d'hydrures.

2. Composition aqueuse d'hydrures selon la revendication 1, dans laquelle la concentration en hydroxyde de potassium KOH, exprimée en pourcentages en masse sur la base de la masse de la composition aqueuse d'hydrures, est comprise entre 1,0 % et 40,0 %.

3. Composition aqueuse d'hydrures selon la revendication précédente, dans laquelle la concentration en hydroxyde de potassium KOH est supérieure ou égale à 4,0 % et/ou inférieure ou égale à 24,0 %, de préférence inférieure ou égale à 10,0 %, par exemple égale à 8,0 %.

4. Composition aqueuse d'hydrures selon l'une quelconque des revendications précédentes, dans laquelle le deuxième hydrure est choisi parmi le borohydrure de sodium NaBH₄, le borohydrure de magnésium Mg(BH₄)₂, le borohydrure de calcium Ca(BH₄)₂, le borohydrure de lithium LiBH₄, l'hydrure de lithium aluminium LiAlH₄, l'hydrure de magnésium MgH₂, l'hydrure de sodium aluminium NaAlH₄ et leurs mélanges.

5. Composition aqueuse d'hydrures selon la revendication précédente, dans laquelle le deuxième hydrure est le borohydrure de sodium NaBH₄.

6. Composition aqueuse d'hydrures selon l'une quelconque des revendications précédentes, dans laquelle le rapport D/K est supérieur ou égal à 1,5, de préférence supérieur ou égal à 2,0 et/ou inférieur ou égal à 6,0, de préférence inférieur ou égal à 4,0, voire de préférence inférieur ou égal à 3,0, par exemple égal à 2,55.

7. Composition aqueuse d'hydrures selon l'une quelconque des revendications précédentes, dans laquelle la concentration en borohydrure de potassium KBH₄, exprimée en pourcentages en masse sur la base de la masse de la composition aqueuse d'hydrures, est comprise entre 2,0 % et 10,0 %, de préférence comprise entre 5,0 % et 6,0 %.

8. Composition aqueuse d'hydrures selon l'une quelconque des revendications précédentes, dans laquelle la concentration en deuxième hydrure, exprimée en pourcentages en masse sur la base de la masse de la composition aqueuse d'hydrures, est comprise entre 10,0 % et 20,0 %, de préférence comprise entre 13,0 % et 19,0 %.

9. Composition aqueuse d'hydrures selon l'une quelconque des revendications précédentes, dans lequel l'additif exothermique est choisi parmi LiH, LiBH₄, CaCl₂, NaOH, CsOH et MgCl₂.

10. Composition aqueuse d'hydrures selon la revendication précédente, dans laquelle la concentration en additif exothermique, exprimée en pourcentages en masse sur la base de la masse de la composition aqueuse d'hydrures, est comprise entre 0,3% et 2,0 %, de préférence inférieure ou égale à 1,0 % et/ou la concentration en autres constituants, exprimée en pourcentages en masse sur la base de la masse de la composition aqueuse d'hydrures, est inférieure à 2,0 %.

11. Procédé de formation d'une composition aqueuse d'hydrures, de préférence selon l'une quelconque des revendications précédentes, comportant une étape de dissolution au moins partielle, voire totale, d'une charge solide dans un milieu aqueux, la charge solide comportant, en pourcentages en masse sur la base de la masse de la charge solide et pour un total de 100 % :
- 10,0 % à 50,0 % de borohydrure de potassium KBH₄,
- 50,0 % à 90,0 %, d'un deuxième hydrure, autre que KBH₄, et présentant une capacité de stockage d'hydrogène supérieure ou égale à 7,4%,
- 10,0 % au plus d'un additif exothermique choisi parmi un troisième hydrure, différent du borohydrure de potassium et du deuxième hydrure, présentant une chaleur latente de réaction d'hydrolyse supérieure à 8 kJ/kg, un composé soluble dans l'eau présentant une chaleur latente de dissolution inférieure à -30 kJ/mol et leurs mélanges,
- moins de 2,0 % d'autres constituants,
le milieu aqueux comportant un solvant aqueux et de l'hydroxyde de potassium KOH au moins partiellement, de préférence complètement dissous dans le solvant aqueux.

12. Procédé d'hydrolyse par voie catalytique de la composition aqueuse d'hydrures selon l'une quelconque des revendications 1 à 10, pour générer du dihydrogène, le procédé comportant la mise en contact de la composition aqueuse d'hydrures avec un catalyseur d'hydrolyse des hydrures de ladite composition aqueuse d'hydrures.

13. Procédé selon la revendication précédente, dans lequel la température de la composition aqueuse d'hydrures est inférieure ou égale à 25°C, voire inférieure ou égale à 10°C, voire même inférieure ou égale à 0°C, voire inférieure ou égale à -10°C.

14. Dispositif (5) utile pour générer du dihydrogène comportant :
- un réservoir (55) contenant une composition aqueuse d'hydrures selon l'une quelconque des revendications 1 à 10, et
- un système catalytique (45) disposé dans le réservoir et comportant un catalyseur (50) d'hydrolyse des hydrures de la composition aqueuse d'hydrures,
le système catalytique étant configuré pour que le catalyseur soit au contact de la composition aqueuse d'hydrures dans une configuration d'hydrolyse et isolé de la composition aqueuse d'hydrures dans une autre configuration du dispositif.

## Patentansprüche

1. Wässrige Zusammensetzung von Hydriden für die katalytische Hydrolyse zur Erzeugung von Diwasserstoff H₂, wobei die wässrige Zusammensetzung von Hydriden ein wässriges Lösungsmittel und zumindest teilweise und vorzugsweise vollständig in dem wässrigen Lösungsmittel gelöste Bestandteile umfasst, wobei es sich bei den Bestandteilen um
- Kaliumhydroxid KOH,
- Kaliumborhydrid KBH₄ und
- ein zweites Hydrid, das von KBH₄ verschieden ist und eine Wasserstoffspeicherkapazität von mehr als 7,4 % aufweist,
- gegebenenfalls ein exothermes Additiv, das aus einem dritten Hydrid, das von Kaliumborhydrid und dem zweiten Hydrid verschieden ist und eine latente Hydrolysereaktionswärme von mehr als 8 kJ/kg aufweist, einer wasserlöslichen Verbindung mit einer latenten Lösungswärme von weniger als -30 kJ/mol und Mischungen davon ausgewählt ist,
handelt, wobei das Z/K-Verhältnis der Konzentration von zweitem Hydrid der wässrigen Zusammensetzung von Hydriden zu Kalium der wässrigen Zusammensetzung von Hydriden zwischen 1,0 und 9,0 liegt, wobei die Konzentrationen in Massenprozent, bezogen auf die Masse der wässrigen Zusammensetzung von Hydriden, ausgedrückt sind.

2. Wässrige Zusammensetzung von Hydriden nach Anspruch 1, wobei die Konzentration von Kaliumhydroxid KOH, ausgedrückt in Massenprozent, bezogen auf die Masse der wässrigen Zusammensetzung von Hydriden, zwischen 1,0 % und 40,0 % liegt.

3. Wässrige Zusammensetzung von Hydriden nach dem vorhergehenden Anspruch, wobei die Konzentration von Kaliumhydroxid KOH größer oder gleich 4,0 % und/oder kleiner oder gleich 24,0 %, vorzugsweise kleiner oder gleich 10,0 %, beispielsweise gleich 8,0 %, ist.

4. Wässrige Zusammensetzung von Hydriden nach einem der vorhergehenden Ansprüche, wobei das zweite Hydrid aus Natriumborhydrid NaBH₄, Magnesiumborhydrid Mg(BH₄)₂, Calciumborhydrid Ca(BH₄)₂, Lithiumborhydrid LiBH₄, Lithiumaluminiumhydrid LiAlH₄, Magnesiumhydrid MgH₂, Natriumaluminiumhydrid NaAlH₄ und Mischungen davon ausgewählt ist.

5. Wässrige Zusammensetzung von Hydriden nach dem vorhergehenden Anspruch, wobei es sich bei dem zweiten Hydrid um Natriumborhydrid NaBH₄ handelt.

6. Wässrige Zusammensetzung von Hydriden nach einem der vorhergehenden Ansprüche, wobei das Z/K-Verhältnis größer oder gleich 1,5, vorzugsweise größer oder gleich 2,0, und/oder kleiner oder gleich 6,0, vorzugsweise kleiner oder gleich 4,0 oder sogar vorzugsweise kleiner oder gleich 3,0, beispielsweise gleich 2,55, ist.

7. Wässrige Zusammensetzung von Hydriden nach einem der vorhergehenden Ansprüche, wobei die Konzentration von Kaliumborhydrid KBH₄, ausgedrückt in Massenprozent, bezogen auf die Masse der wässrigen Zusammensetzung von Hydriden, zwischen 2,0 % und 10,0 %, vorzugsweise zwischen 5,0 % und 6,0 %, liegt.

8. Wässrige Zusammensetzung von Hydriden nach einem der vorhergehenden Ansprüche, wobei die Konzentration von zweitem Hydrid, ausgedrückt in Massenprozent, bezogen auf die Masse der wässrigen Zusammensetzung von Hydriden, zwischen 10,0 % und 20,0 %, vorzugsweise zwischen 13,0 % und 19,0 %, liegt.

9. Wässrige Zusammensetzung von Hydriden nach einem der vorhergehenden Ansprüche, wobei das exotherme Additiv aus LiH, LiBH₄, CaCl₂, NaOH, CsOH und MgCl₂ ausgewählt ist.

10. Wässrige Zusammensetzung von Hydriden nach dem vorhergehenden Anspruch, wobei die Konzentration von exothermem Additiv, ausgedrückt in Massenprozent, bezogen auf die Masse der wässrigen Zusammensetzung von Hydriden, zwischen 0,3 % und 2,0 % liegt und vorzugsweise kleiner oder gleich 1,0 % ist und/oder die Konzentration anderer Bestandteile, ausgedrückt in Massenprozent, bezogen auf die Masse der wässrigen Zusammensetzung von Hydriden, kleiner als 2,0 % ist.

11. Verfahren zur Bildung einer wässrigen Zusammensetzung von Hydriden, vorzugsweise nach einem der vorhergehenden Ansprüche, umfassend einen Schritt des zumindest teilweise oder sogar vollständigen Lösens einer festen Charge in einem wässrigen Medium, wobei die feste Charge in Massenprozent, bezogen auf die Masse der festen Charge und für eine Summe von 100 %,
- 10,0 % bis 50,0 % Kaliumborhydrid KBH₄,
- 50,0 % bis 90,0 % eines zweiten Hydrids, das von KBH₄ verschieden ist und eine Wasserstoffspeicherkapazität größer oder gleich 7,4 % aufweist,
- höchstens 10,0 % eines exothermen Additivs, das aus einem dritten Hydrid, das von Kaliumborhydrid und dem zweiten Hydrid verschieden ist und eine latente Hydrolysereaktionswärme von mehr als 8 kJ/kg aufweist, einer wasserlöslichen Verbindung mit einer latenten Lösungswärme von weniger als -30 kJ/mol und Mischungen davon ausgewählt ist,
- weniger als 2,0 % andere Bestandteile umfasst, wobei das wässrige Medium ein wässriges Lösungsmittel und zumindest teilweise und vorzugsweise vollständig in dem wässrigen Lösungsmittel gelöstes Kaliumhydroxid KOH umfasst.

12. Verfahren zur katalytischen Hydrolyse der wässrigen Zusammensetzung von Hydriden nach einem der Ansprüche 1 bis 10 zur Erzeugung von Diwasserstoff, wobei das Verfahren das Inkontaktbringen der wässrigen Zusammensetzung von Hydriden mit einem Katalysator zur Hydrolyse der Hydride der wässrigen Zusammensetzung von Hydriden umfasst.

13. Verfahren nach dem vorhergehenden Anspruch, wobei die Temperatur der wässrigen Zusammensetzung von Hydriden kleiner oder gleich 25 °C oder sogar kleiner oder gleich 10 °C oder sogar kleiner oder gleich 0 °C oder sogar kleiner oder gleich -10 °C ist.

14. Vorrichtung (5) zur Erzeugung von Diwasserstoff, umfassend:
- einen Behälter (55), der eine wässrige Zusammensetzung von Hydriden nach einem der Ansprüche 1 bis 10 enthält, und
- ein katalytisches System (45), dass in dem Behälter angeordnet ist und einen Katalysator (50) zur Hydrolyse der Hydride der wässrigen Zusammensetzung von Hydriden umfasst,
wobei das katalytische System so konfiguriert ist, dass der Katalysator in einer Hydrolysekonfiguration mit der wässrigen Zusammensetzung von Hydriden in Kontakt steht und in einer anderen Konfiguration der Vorrichtung von der wässrigen Zusammensetzung von Hydriden isoliert ist.

## Claims

1. Aqueous composition of hydrides intended for undergoing catalytic hydrolysis to generate dihydrogen H₂, the aqueous composition of hydrides comprising an aqueous solvent and constituents at least partially, preferably completely, solubilized in the aqueous solvent, said constituents being:
- potassium hydroxide KOH,
- potassium borohydride KBH₄,
- a second hydride other than KBH₄ and having a hydrogen storage capacity of greater than 7.4%,
- optionally, an exothermic additive selected from a third hydride different from potassium borohydride and from the second hydride and having a latent heat of hydrolysis reaction greater than 8 kJ/kg, a water-soluble compound having a latent heat of dissolution of less than -30 kJ/mol and mixtures thereof,
the ratio D/K of the concentration of the second hydride in the aqueous composition of hydrides to the potassium borohydride concentration in the aqueous composition of hydrides being between 1.0 and 9.0, said concentrations being expressed in percentages by weight based on the weight of the aqueous composition of hydrides.

2. Aqueous composition of hydrides according to Claim 1, wherein the concentration of potassium hydroxide KOH expressed as percentages by weight based on the weight of the aqueous composition of hydrides is between 1.0% and 40.0%.

3. Aqueous composition of hydrides according to the preceding claim, wherein the concentration of potassium hydroxide KOH is greater than or equal to 4.0% and/or less than or equal to 24.0%, preferably less than or equal to 10.0%, for example equal to 8.0%.

4. Aqueous composition of hydrides according to any of the preceding claims, wherein the second hydride is selected from sodium borohydride NaBH₄, magnesium borohydride Mg(BH₄)₂, calcium borohydride Ca(BH₄)₂, lithium borohydride LiBH₄, lithium aluminium hydride LiAlH₄, magnesium hydride MgH₂, sodium aluminium hydride NaAlH₄ and mixtures thereof.

5. Aqueous composition of hydrides according to the preceding claim, wherein the second hydride is sodium borohydride NaBH₄.

6. Aqueous composition of hydrides according to any of the preceding claims, wherein the ratio D/K is greater than or equal to 1.5, preferably greater than or equal to 2.0 and/or less than or equal to 6.0, preferably less than or equal to 4.0, or even preferably less than or equal to 3.0, for example equal to 2.55.

7. Aqueous composition of hydrides according to any of the preceding claims, wherein the concentration of potassium borohydride KBH₄ expressed as percentages by weight based on the weight of the aqueous composition of hydrides is between 2.0% and 10.0%, preferably between 5.0% and 6.0%.

8. Aqueous composition of hydrides according to any of the preceding claims, wherein the concentration of the second hydride expressed as percentages by weight based on the weight of the aqueous composition of hydrides is between 10.0% and 20.0%, preferably between 13.0% and 19.0%.

9. Aqueous composition of hydrides according to any of the preceding claims, wherein the exothermic additive is selected from LiH, LiBH₄, CaCl₂, NaOH, CsOH and MgCl₂.

10. Aqueous composition of hydrides according to the preceding claim, wherein the concentration of the exothermic additive expressed as percentages by weight based on the weight of the aqueous composition of hydrides is between 0.3% and 2.0%, preferably less than or equal to 1.0%, and/or the concentration of other constituents expressed as percentages by weight based on the weight of the aqueous composition of hydrides is less than 2.0%.

11. Process for the formation of an aqueous composition of hydrides, preferably according to any of the preceding claims, comprising a step of at least partial, or even total, dissolution of a solid charge in an aqueous medium, the solid charge comprising, as percentages by weight based on the weight of the solid charge and adding up to a total of 100%:
- 10.0% to 50.0% of potassium borohydride KBH₄,
- 50.0% to 90.0% of a second hydride other than KBH₄ and having a hydrogen storage capacity of greater than or equal to 7.4%,
- 10.0% at most of an exothermic additive selected from a third hydride different from potassium borohydride and from the second hydride and having a latent heat of hydrolysis reaction greater than 8 kJ/kg, a water-soluble compound having a latent heat of dissolution of less than -30 kJ/mol and mixtures thereof,
- less than 2.0% of other constituents,
the aqueous medium comprising an aqueous solvent and potassium hydroxide KOH at least partially, preferably completely, dissolved in the aqueous solvent.

12. Process for the catalytic hydrolysis, to generate dihydrogen, of the aqueous composition of hydrides according to any of Claims 1 to 10, the process comprising the contacting of the aqueous composition of hydrides with a catalyst for the hydrolysis of the hydrides in said aqueous composition of hydrides.

13. Process according to the preceding claim, wherein the temperature of the aqueous composition of hydrides is less than or equal to 25°C, or even less than or equal to 10°C, or even less than or equal to 0°C, or even less than or equal to -10°C.

14. Device (5) that may be used to generate dihydrogen, comprising:
- a reservoir (55) containing an aqueous composition of hydrides according to any of Claims 1 to 10, and
- a catalytic system (45) disposed in the reservoir and comprising a catalyst (50) for the hydrolysis of the hydrides in the aqueous composition of hydrides,
the catalytic system being configured such that the catalyst is in contact with the aqueous composition of hydrides in one hydrolysis configuration and isolated from the aqueous composition of hydrides in another configuration of the device.
